Europäisches Patentamt

European Patent Office

Office européen des brevets

(11) Veröffentlichungsnummer: **0 154 349**
**B1**

(12) # EUROPÄISCHE PATENTSCHRIFT

(45) Veröffentlichungstag der Patentschrift:
25.10.89

(51) Int. Cl.⁴: **B 23 Q 3/157**, B 23 Q 7/00

(21) Anmeldenummer: **85102653.4**

(22) Anmeldetag: **06.03.85**

(54) **Einrichtung zum Einwechseln von Werkzeugen oder dergleichen in die Arbeitsspindel einer Werkzeugmaschine.**

(30) Priorität: **09.03.84 DE 3408734**

(43) Veröffentlichungstag der Anmeldung:
**11.09.85 Patentblatt 85/37**

(45) Bekanntmachung des Hinweises auf die Patenterteilung:
**25.10.89 Patentblatt 89/43**

(84) Benannte Vertragsstaaten:
**AT CH FR GB IT LI**

(56) Entgegenhaltungen:
**EP-A-0 011 882**
**GB-A-2 126 136**
**JP-A-56 095 559**
**JP-B-51 038 109**
**US-A-4 003 166**

(73) Patentinhaber: **Friedrich Deckel Aktiengesellschaft, Plinganserstrasse 150, D-8000 München 70 (DE)**

(72) Erfinder: **Geiger, Michael, Dipl.- Ing. F.H., Ina-Seidel- Weg 8, D-8130 Starnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Werkzeugmaschine der im Oberbegriff des Anspruches 1 genannten Art.

Derartige Werkzeugmaschinen kennt man seit langem als sogenannte UNIVERSAL BOHR- und FRÄSMASCHINEN. Dabei werden im allgemeinen die Werkzeuge in die beiden Spindeln jeweils von Hand eingesetzt oder aus diesen entnommen.

Im Zuge einer fortschreitenden Automatisierung mit numerischen Steuerungen für derartige Maschinen ist es erwünscht, auch den Werkzeugwechsel zu automatisieren, wobei eine besondere Schwierigkeit darin besteht, einen Werkzeugwechsler zu schaffen, der beide Arbeitsspindeln bedienen kann.

Für einspindelige Maschinen sind Wechselarme mit zwei im wesentlichen radial zu einer Drehachse ausgerichteten Armen bekannt, wobei die Drehachse in einem Winkel von 45° zur Achse der Arbeitsspindel ausgerichtet ist und die mit Greifeinrichtungen versehenen Greifenden der Arme jeweils um 45° zur Drehachse hin abgewinkelt sind und wobei der Wechselarm in Spindelachsenrichtung relativ zur Arbeitsspindel verstellbar ist.

Derartige Wechselarme dienen beispielsweise zum Austausch von Werkzeugen zwischen dem Magazin und der Spindel einer Fräsmaschine, einer Bohrmaschine oder dergleichen. Grundsätzlich können sie z. B. auch zum Einwechseln von Werkstücken in die Arbeitsspindel einer Drehbank dienen. Die im Winkel von 45° zur Arbeitsspindel stehende Drehachse des Wechselarmes erlaubt dabei eine Anordnung des Werkzeugmagazins in der Weise, daß die Werkzeuge in einem Winkel von 90° zur Arbeitsspindelachse ausgerichtet sind und beim Wechselvorgang in die Arbeitsspindelrichtung geschwenkt werden.

Derartige Werkzeuge haben im allgemeinen ein für die Aufnahme in der Spindel ausgebildetes, genormtes Ende und ein durch das eigentliche Werkzeug gebildetes Ende, die nach Länge und Umfang erheblich variieren können. Damit zwei in einem Werkzeugwechselarm angeordnete Werkzeuge sich nicht gegenseitig behindern, sind diese bei bekannten Werkzeugwechselarmen mit den eigentlichen Werkzeugenden nach außen weisend angeordnet. Da die Werkzeuge zum Teil sehr große Durchmesser und Längen aufweisen, ergibt sich bei der Wechseldrehung des Werkzeugwechselarmes ein sehr großer Flugkreis, so daß der Wechselarm für diese Drehbewegung aus dem Maschinenbereich herausgefahren werden muß oder die Werkzeugabmessungen begrenzt werden müssen, damit sie nicht mit der Maschine oder dem Werkstück kollidieren.

Das Kollisionsproblem ist von besonderem Gewicht bei Werkzeugmaschinen mit zwei in einem Winkel zueinander angeordneten Arbeitsspindeln, da durch diese Anordnung der zur Verfügung stehende Raum für die Wechselbewegung des Wechselarmes mit den Werkzeugen noch weiter eingeschränkt wird.

Werkzeugwechselarme der beschriebenen Art sind außerdem bisher nur für einspindelige Werkzeugmaschinen verwendet worden, da sie nur für eine ganz bestimmte gegenseitige Anordnung von Werkzeugmagazin und Arbeitsspindel ausgelegt sind.

Es ist die Aufgabe der Erfindung, eine Werkzeugmaschine der im Oberbegriff des Anspruches 1 genannten Art mit einer automatischen Werkzeugwechseleinrichtung zu schaffen, die beide Spindeln bedienen kann und die mit einem möglichst kleinen Raum für die Wechselbewegung der ein- oder auszuwechselnden Werkzeuge auskommt.

Diese Aufgabe ist erfindungsgemäß durch die im Kennzeichen des Anspruches 1 genannten Merkmale gelöst.

Die Werkzeuge, welche im allgemeinen in kegeligen Werkzeughaltern aufgenommen sind, werden mit diesen Aufnahmekegeln von der Drehachse fortweisend, d.h. mit den eigentlichen Werkzeugenden zueinander gekehrt im Wechselarm angeordnet. Damit diese Werkzeugenden, deren Längen und/oder Umfänge stark variieren können, sich nicht gegenseitig behindern, sind die Greifenden des Wechselarms seitlich versetzt derart, daß sich die Werkzeugachsen nicht direkt kreuzen. Die nach außen weisenden Aufnahmekegel haben eine für bestimmte Maschinen festgelegte, genormte Länge. Diese ist im allgemeinen kleiner als die größte vorkommende Werkzeuglänge, so daß durch die erfindungsgemäße Anordnung der Flugkreis der Werkzeuge verringert werden kann. Außerdem ist wegen der festgelegten Größe der Aufnahmekegel der freizuhaltende Kollisionsfreiraum ebenfalls festgelegt, so daß er nicht für jede Werkzeugkombination neu bestimmt werden muß.

Der seitliche Versatz der Greifenden des Wechselarmes ist so bemessen, daß die Werkzeuge mit dem größten vorkommenden Durchmesser die Drehachse nicht berühren.

Damit der Wechselarm sowohl aus einer Spindel als auch aus dem Werkzeugmagazin Werkzeuge entnehmen bzw. in diese einsetzen kann, ist ferner vorgesehen, daß der Wechselarm um die Drehachse drehbar und außerdem jeweils in Richtung der Achsen der im Wechselarm befindlichen Werkzeuge verschiebbar an der Werkzeugmaschine gelagert ist.

Um den Werkzeugwechselarm in einer zweispindeligen Werkzeugmaschine verwenden zu können, ist außerdem vorgesehen, daß der Wechselarm zusätzlich als ganzes mit seiner Dreh- und Verschiebelagerung um eine senkrecht zu der von den beiden Spindelachsen aufgespannten Spindelebene stehende Schwenkachse in einem dem Winkel zwischen den Spindelachsen entsprechenden Bereich zwischen zwei Wechselpositionen verschwenkbar ist, bei deren erster die Drehachse zu einer ersten Arbeitsspindelachse und bei deren zweiter die Drehachse zu einer zweiten Arbeitsspindelachse in einem Winkel von 45° ausgerichtet ist.

Aus der US-A-4 003 166 ist eine einspindelige Drehbank mit einem Wechselarm bekannt, dessen Greifenden in der oben beschriebenen Weise seitlich zueinander versetzt sind, so daß sich die Achsen der vom Wechselarm gehaltenen Werkstücke nicht schneiden.

Die Werkstücke sind im Verhältnis zu den Abmessungen des Wechselarmes sehr klein, so daß sie sich auch ohne diesen Versatz nicht behindern würden. Der Versatz ist deshalb nicht auf die Abmessungen der zu wechselnden Werkstücke abgestimmt, sondern unabhängig davon auf andere geometrische Forderungen der Maschine. Außerdem haben die Werkstücke gemäß der US-A-4 003 166 zwei hinsichtlich ihrer Form und Größe etwa gleichwertige Enden, so daß insofern ein Vergleich mit der erfindungsgemäßen Anordnung kaum möglich ist, bei der ein in seiner Form und Größe gleichbleibendes, genormtes Ende nach außen weisend angeordnet sein soll, während das andere Ende, dessen Form und Größe stark variieren kann, jeweils zur Wechselarmachse hinweist.

Außerdem ist die bekannte Maschine einspindelig und infolgedessen eine zusätzliche Schwenkbarkeit für die Anpassung des Wechselarmes an zwei Spindelrichtungen nicht vorgesehen.

In weiterer Ausgestaltung der Erfindung ist vorgesehen, daß sich bei der ersten Wechselposition ein erstes Greifende vor der ersten Arbeitsspindel mit einer in Achsrichtung der ersten Arbeitsspindel liegenden Werkzeugausrichtung befindet und daß das zweite Greifende eine einer senkrecht zur Spindelebene liegenden Werkzeugausrichtung entsprechende Lage einnimmt, und daß sich bei der zweiten Wechselposition ein Greifende vor der zweiten Arbeitsspindel mit einer in Achsrichtung dieser zweiten Arbeitsspindel liegenden Werkzeugausrichtung befindet und das andere Greifende eine einer senkrecht zur Spindelebene liegenden Werkzeugausrichtung entsprechende Lage einnimmt. Bei jeder Wechselposition ist demnach ein Werkzeug zu einer der beiden Werkzeugsspindeln ausgerichtet; das andere Werkzeug ist bei beiden Wechselpositionen senkrecht zur Spindelebene gerichtet.

In weiterer Ausgestaltung der Erfindung ist vorgesehen, daß der Wechselarm als ganzes senkrecht zu der von den Spindelachsen aufgespannten Spindelebene verschiebbar ist und daß er mit einem an dem der Maschine abgewandten Ende des Verschiebeweges angeordneten Werkzeugmagazin zusammenwirkt. Dabei kann die Verschiebebewegung selbst zum Einsetzen und Ausziehen des Werkzeuges in bzw. aus dem Werkzeugmagazin dienen. Da bei beiden Wechselpositionen jeweils ein Greifende so ausgerichtet ist, daß das von diesem gehaltene Werkzeug senkrecht zur Spindelebene steht, bietet es sich an, die Werkzeuge im Werkzeugmagazin ebenfalls senkrecht zur Spindelebene auszurichten, so daß sie von dem genannten Greifende des Werkzeugwechselarms direkt aus dem Magazin entnommen bzw. in dieses eingesetzt werden können.

Ein weiterer Vorteil ergibt sich dann, wenn die Schwenkachse des Werkzeugwechselarmes mit der Achse des jeweils senkrecht zur Spindelebene ausgerichteten Werkzeuges zusammenfällt, da dann dieses Werkzeug seine Lage in Bezug zum Magazin beim Umrüsten von einer Spindelachsenrichtung auf die andere beibehält, so daß der Übergabeort zwischen Wechselarm und Magazin für beide Spindelachsenrichtungen der gleiche bleibt.

In einem weiteren Ausführungsbeispiel der Erfindung ist zur Lagerung des Wechselarmes ein senkrecht zur Spindelebene sich erstreckender Träger, ein daran in Trägerrichtung verschiebbar und um eine senkrecht zur Spindelebene schwenkbar angeordneter Tragebock sowie ein am Tragebock parallel zur Spindelebene verschiebbar angeordnetes Lagergehäuse vorgesehen, in welchem die Drehachse des Wechselarmes drehbar gelagert ist und in welchem ein mit der Drehachse verbundener Antriebsmotor aufgenommen ist. In weiterer Ausgestaltung der Erfindung ist vorgesehen, daß das Werkzeugmagazin selbst ebenfalls um die Schwenkachse schwenkbar ist, so daß die Orientierung des Magazins zum Wechselarm bei dessen Schwenkbewegung erhalten bleibt.

Ein Ausführungsbeispiel der Erfindung ist in der Zeichnung dargestellt und im folgenden näher beschrieben. Es zeigen:

Figur 1 in perspektivischer Darstellung schematisch eine Universal Fräs- und Bohrmaschine mit einer horizontalen und einer vertikalen Arbeitsspindel und mit einem auf beide Arbeitsspindelrichtungen umrüstbaren Wechselarm;

Fig. 2 schematisch einen Wechselarm gemäß Fig. 1 in perspektivischer Darstellung;

Fig. 3 eine Einrichtung zur Lagerung des Wechselarmes;

Fig. 4 eine Einrichtung gemäß Fig. 3 in einer Ansicht entsprechend der Linie IV - IV.

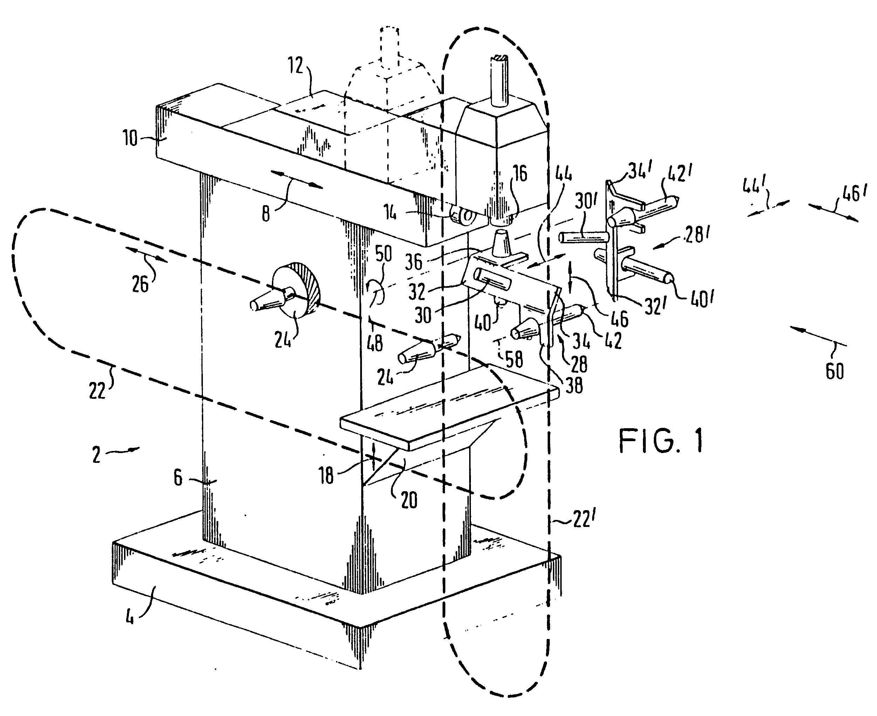

Fig. 1 zeigt schematisch eine herkömmliche Universal-Bohr- und Fräsmaschine 2 mit einem Ständerfuß 4, einem Ständer 6, einem auf dem Ständer in Richtung des Pfeiles 8 verschiebbar gelagerten Spindelarm 10 sowie einem darauf angeordneten Spindelbock 12. Im Spindelarm 10 ist die Horizontalspindel 14, im Spindelbock 12 die Vertikalspindel 16 gelagert, wobei beide Spindeln mit einem nicht dargestellten Antrieb verbunden sind. An der Ständervorderseite ist in Richtung des Pfeiles 18 verschiebbar der Werkzeugtisch 20 zur Aufnahme eines Werkstücks angeordnet. Auf der dem Betrachter zugewandten Seite der Maschine 2 ist ein Kettenmagazin 22 angeordnet, welches eine Reihe von Werkzeugen 24 trägt. Das Kettenmagazin 22 ist in herkömmlicher und deshalb nicht näher bezeichneter Weise in Richtung des Pfeiles 26 umlaufend gelagert und mit einem Umlaufantrieb verbunden, so daß alle Werkzeuge 24 in eine bestimmte Wechselposition gebracht werden können, in der sie durch den Wechselarm 28 bzw. 28' oder auch durch einen beliebigen Zwischenwechsler aus dem Magazin entnommen werden kann.

Der Wechselarm 28 weist zwei radial zu einer Drehachse 30 ausgerichtete Arme 32, 34 auf. An den Greifenden dieser Arme 32, 34 sind Greifeinrichtungen 36, 38 zum Erfassen von Werkzeugen 40, 42 ausgebildet.

Der in Fig. 1 mit 28 bezeichnete Wechselarm ist für die Bedienung der vertikalen Arbeitsspindel 16 eingestellt. Wie die Fig. 1 erkennen läßt, ist die Drehachse 30 in einem Winkel von 45° zur Achsenrichtung der Spindel 16 geneigt. Die Greifenden sind jeweils in einem Winkel von 45° abgekröpft, so daß die beiden Werkzeuge 40, 42 zueinander einen Winkel von 90° einnehmen. Die Greifenden der Arme 32, 34 sind bezüglich einer zu beiden Werkzeugachsen parallelen, durch die Drehachse 30 verlaufenden Ebene seitlich gegeneinander versetzt, so daß sich die Achsen der Werkzeuge 40, 42 nicht unmittelbar kreuzen. Die Werkzeuge 40, 42 sind so in den Wechselarm eingesetzt, daß sie mit ihren in die Arbeitsspindel einzusetzenden Enden, die hier in herkömmlicher Weise als Normkegel ausgebildet sind, von der Drehachse 30 fortweisen. Der seitliche Versatz der Greifenden ist vorzugsweise so bemessen, daß sich zwei Werkzeuge mit dem größten vorgesehenen Durchmesser nicht berühren.

Der Wechselvorgang läuft in folgender Weise ab: Die Greifeinrichtung 38 hält ein aus dem Magazin 22 entnommenes Werkzeug 42; die Greifeinrichtung 36 ist leer. Der Wechselarm 28 wird in Richtung des Pfeiles 44 verschoben, wobei er das in der vertikalen Arbeitsspindel 16 enthaltene Werzeug 40 ergreift. Sodann führt der Wechselarm 28 eine Verschiebung des Pfeiles 56 durch, wobei er das Werkzeug 40 aus der Arbeitsspindel 16 entnimmt. Nach diesem Vorgang befindet sich der Wechselarm 28 in der in Fig. 1 dargestellten Lage. Durch eine Drehung um die Achse 30 werden die Positionen der Werkzeuge 40 und 42 miteinander vertauscht. Durch eine Einsetzbewegung in Richtung des Pfeiles 46 und eine Lösebewegung in Richtung des Pfeiles 44 wird der Wechselvorgang beendet. In der nun folgenden Arbeitsphase der Maschine kann der Wechselarm 28 zum Magazin 22 verfahren werden, wo er das aus der Spindel 16 entnommene Werkzeug 40 ablegt und ein neues Werkzeug entnimmt.

Um die Maschine 2 auf Horizontalspindelbetrieb umzurüsten, wird zunächst der Spindelbock 12 aus dem Arbeitsbereich geschwenkt oder, wie in Fig. 1 mit gestrichelten Linien dargestellt, verschoben. Sodann wird der Wechselarm um eine senkrecht zu der von den Spindel 14, 16 aufgespannten Ebene verlaufende Schwenkachse 48 in Richtung des Pfeiles 50 verschwenkt, so daß er im wesentlichen die mit 28' bezeichnete Lage einnimmt. Es sei bemerkt, daß in Fig. 1 der Wechselarm 28' aus Gründen einer besseren Übersicht nach rechts verschoben dargestellt ist. Da der Wechselarm als Ganzes, d.h. mit den die Bewegungen 44 und 46 ermöglichenden Lagerungen verschwenkt wird, kann er in seiner Stellung 28' die Bewegungen 44' und 46' ausführen. Der Wechselvorgang verläuft entsprechend dem vorbeschriebenen Wechselvorgang in der Weise, daß der Wechselarm 28' in Richtung des Pfeiles 44' verschoben wird, wobei er das in der Arbeitsspindel 14 enthaltene Werkzeug 40 ergreift. Eine Bewegung in Richtung des Pfeiles 46' dient zum Ausziehen des Werkzeuges 40 aus der Spindel. Durch eine Drehung um die in einem Winkel von 45° zur Arbeitsspindel 14 stehende Drehachse 30' werden die Positionen der Werkzeuge 40' und 42' vertauscht, so daß das Werkzeug 42' in die Spindel 14 eingesetzt werden kann; das Werkzeug 40' befindet sich dann in einer räumlichen Lage, in der es durch eine Verschiebung des Wechselarms in Richtung des Pfeiles 44' dem Magazin 22 zugeführt werden kann.

Wie ebenfalls in Fig. 1 dargestellt ist, kann das Werkzeugmagazin 22 beim Verschwenken des Wechselarmes um die Schwenkachse 48 ebenfalls um diese Achse in seine Lage 22' geschwenkt werden, so daß die gegenseitigen zum Einsetzen bzw. Ausziehen der Werkzeuge aus dem Magazin erforderlichen Bewegungen zwischen Wechselarm und Magazin beim Umrüsten des Wechselarmes erhalten bleiben.

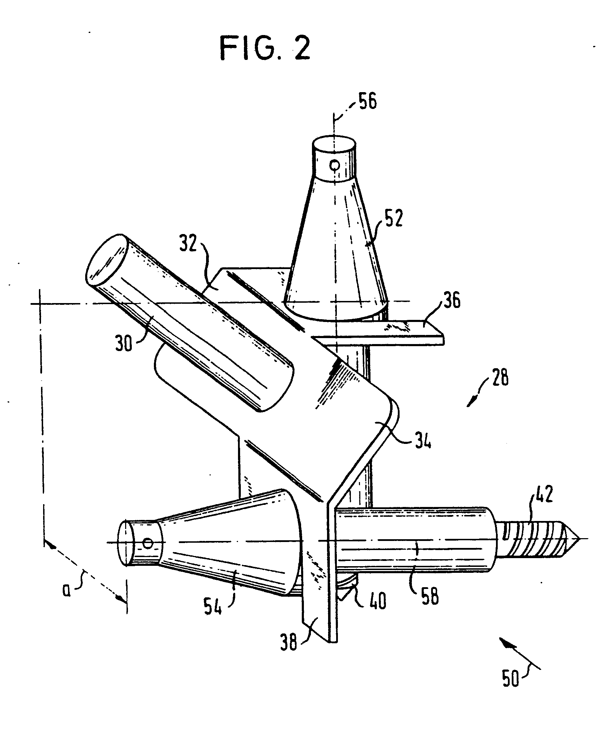

Fig. 2 zeigt den Wechselarm 28 in einer perspektivischen, schematischen Darstellung. Radial zur Drehachse 30 erstrecken sich die Arme 32, 34, an deren Enden die Greifeinrichtungen 36, 38 angeordnet sind. Es läßt sich erkennen, daß in Richtung des Pfeiles 50 gesehen, die zum Einsetzen in die Arbeitsspindeln vorgesehenen Normkegel 52, 54 der Werkzeuge 40, 42 von der Drehachse fortweisend angeordnet sind. Die Greifeinrichtungen 36, 38 sind bezüglich einer parallel zu den Werkzeugachsen 56, 58 liegenden, durch die Drehachse 30 verlaufenden Ebene seitlich so versetzt, daß sich die Werkzeugachsen 56, 58 nicht direkt kreuzen, sondern einen Versatz a zueinander aufweisen.

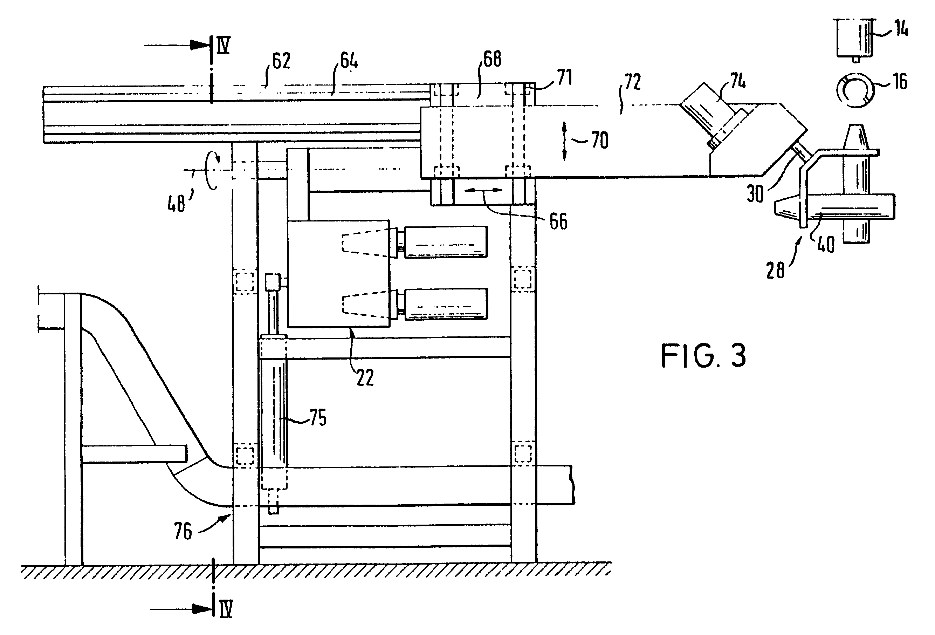

Fig. 3 zeigt, in Richtung des Pfeiles 60 in Fig. 1 gesehen, eine Einrichtung zur Lagerung des Wechselarmes 28, wobei der besseren Übersichtlichkeit wegen die Werkzeugmaschine selbst nicht dargestellt wurde. Senkrecht zu der von den beiden Spindeln 14, 16 aufgespannten Spindelebene erstreckt sich ein Träger 62 mit Führungsbahnen 64, auf denen in Richtung des Pfeiles 66 ein Tragebock 68 verschiebbar ist. Der Tragebock 68 ist mit Führungsbahnen 71 versehen, auf welchem in Richtung des Pfeiles 70 verschiebbar ein Lagergehäuse 72 angeordnet ist. Im Lagergehäuse 72 ist die Drehachse 30 des Wechselarmes 28 drehbar gelagert und mit einem Antriebsmotor 74 drehverbunden. Wie ein Vergleich mit Fig. 1 zeigt, nimmt der Wechselarm in Fig. 3 die zum Bedienen der vertikalen Spindel 16 erforderliche Stellung ein. Die Bewegungsrichtung 66 entspricht der Bewegungsrichtung 44, die Bewegungsrichtung 70 der Bewegungsrichtung 46 in Fig. 1. Diese Bewegungen können gleichzeitig dazu dienen, die Werkzeuge in das Magazin 22 einzusetzen bzw. aus diesem zu entnehmen. Dazu wird der Wechselarm 28 zunächst in Richtung des Pfeiles 70 nach unten verschoben, bis das Werkzeug 40 zu einer Aufnahmeposition im Magazin 22 ausgerichtet ist. Durch Verschiebung des Wechselarmes 28 nach links wird das Werkzeug 40 in das Magazin eingesetzt. Durch eine Bewegung des Lagergehäuses 72 in Richtung des Pfeiles 70 nach oben löst sich der Wechselarm 28 vom Werkzeug, so daß das Kettenmagazin weiter getaktet und ein anderes Werkzeug in die Wechselposition verbracht werden kann. Durch eine Bewegung des Lagergehäuses 72 in Richtung des Pfeiles 70 nach unten wird das neue Werkzeug ergriffen, durch eine Bewegung des Tragebocks 68 in Richtung des Pfeiles 66 nach rechts wird es aus dem Magazin entnommen und in der weiter vorne beschriebenen Weise der Werkzeugmaschine 2 zugeführt. Der Träger 62 mit dem daran angeordneten Tragebock 68 sowie dem am Tragebock 68 verschiebbar gelagerten Lagergehäuse 72 ist um die Achse 48 schwenkbar gelagert, wie bei der Beschreibung der Fig. 1 schon erläutert wurde. Das Magazin 22 ist mit der aus dem Träger 62, dem Tragebock 68 und dem Lagergehäuse 72 bestehende Baugruppe fest verbunden, so daß es ebenfalls um die Achse 48 mitgeschwenkt wird. Als Schwenkantrieb dient eine hydraulische Kolben-Zylinder-Einheit 74, welche am Magazin 22 angreift und sich gegen ein die schwenkbare Baugruppe haltendes Traggestell 76 abstützt.

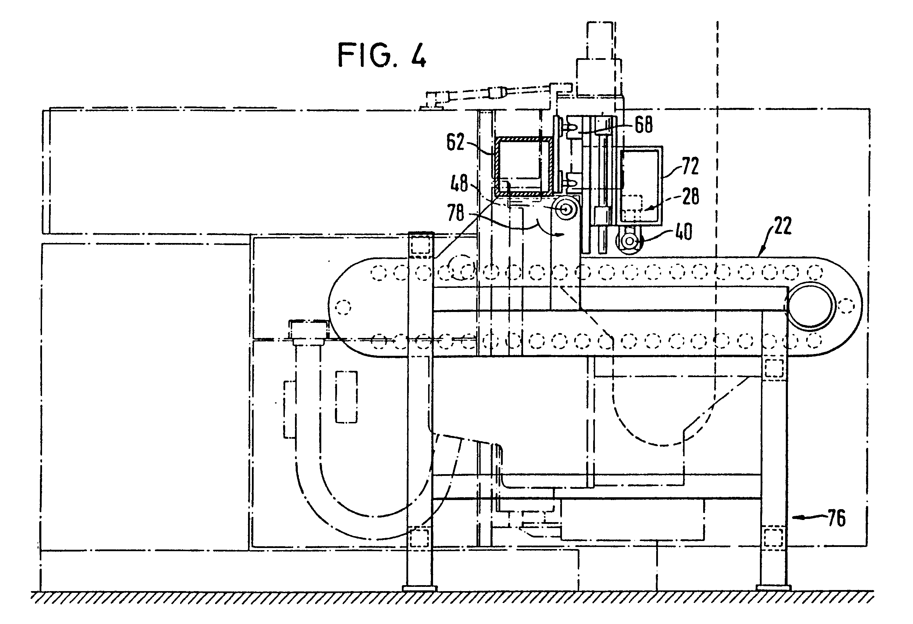

Fig. 4 zeigt in einer Ansicht gemäß der Linie IV-IV das Traggestell 76 mit der aus dem Träger 62, dem Tragebock 68 und dem Lagergehäuse 72 bestehende Baugruppe zur Halterung des Wechselarmes 28 sowie mit dem mit dieser Baugruppe fest verbundenen Werkzeugmagazin 22. Die genannte Baugruppe und das Werkzeugmagazin nehmen die gleiche Lage ein wie in Fig. 3, bei welcher der Wechselarm 28 zum Bedienen der vertikalen Arbeitsspindel ausgerichtet ist. Die genannte Baugruppe mit dem Werkzeugmagazin 22 sind um die Achse 48 in Richtung des Pfeiles 78, welcher dem Pfeil 50 in Fig. 1 entspricht, verschwenkbar, womit der Wechselarm 28 für die Bedienung der horizontalen Arbeitsspindel umgerüstet wird, wie bereits beschrieben wurde.

Falls die gegenseitige Anordnung der Spindeln 14, 16 das zuläßt, kann es von Vorteil sein, die Schwenkachse 48 mit der Werkzeugachse 58 (siehe Fig. 1) zusammenfallen zu lassen. Dann bleibt beim Schwenkvorgang des Wechselarmes 28 die Lage des Werkzeuges 42 im Raum gleich; eine derartige Anordnung bietet sich beispielsweise dann an, wenn das Werkzeug vom Wechselarm 28 nicht direkt in das Magazin eingesetzt bzw. aus diesem entnommen wird, sondern über einen Zwischenwechsler, welcher das Werkzeug zwischen dem Magazin und einer Zwischenposition, welcher der oben beschriebenen Werkzeuglage entsprechen könnte, transportiert.

**Patentansprüche**

1. Werkzeugmaschine mit zwei in einem Winkel zueinander in einer Spindelebene stehenden Arbeitsspindelachsen, dadurch gekennzeichnet,
- daß ein Wechselarm (28) mit zwei im wesentlichen radial zu einer Drehachse (30) ausgerichteten Armen vorgesehen ist, wobei die mit Greifeinrichtungen versehenen Greifenden (32, 34) der Arme jeweils um 45° zur Drehachse (30) hin abgewinkelt sind und jeweils bezüglich einer durch die Drehachse (30) verlaufenden Bezugsebene seitlich gegeneinander versetzt sind, so daß sich die Achsen (56, 58) der einzusetzenden Werkzeuge (40, 42) nicht schneiden und wobei ferner die Werkzeuge (40, 42) jeweils mit einer mit ihren in die Arbeitsspindeln (14, 16) einzusetzenden Enden (52, 54) von der Drehachse (30) fortweisenden Ausrichtung im Wechselarm (28) aufgenommen werden,
- daß der Wechselarm (28) um die Drehachse (30) drehbar und jeweils in Richtung (44, 46) der Achsen (56, 58) verschiebbar an der Werkzeugmaschine gelagert ist,
- und, daß der Wechselarm (28) zusätzlich als Ganzes mit seiner Dreh- und Verschiebelagerung um eine senkrecht zu der von den beiden Spindelachsen aufgespannten Spindelebene stehende Schwenkachse (48) in einem dem Winkel zwischen den Spindelachsen entsprechenden Bereich zwischen zwei Wechselpositionen verschwenkbar ist, bei deren erster die Drehachse (30) zu einer ersten Arbeitsspindel-Achse (16) und bei deren zweiter die Drehachse (30) zu einer zweiten Arbeitsspindel-Achse (14) in einem Winkel von 45° ausgerichtet ist.

2. Werkzeugmaschine nach Anspruch 1, dadurch gekennzeichnet, daß sich bei der ersten Wechselposition ein erstes Greifende (32) vor der ersten Arbeitsspindel (16) mit einer in Achsrichtung der ersten Arbeitsspindel (16) liegenden Werkzeugausrichtung befindet und das zweite Greifende (34) eine einer senkrecht zur Spindelebene liegenden Werkzeugausrichtung entsprechende Lage einnimmt, und daß sich bei der zweiten Wechselposition ein Greifende (34') vor der zweiten Arbeitsspindel (14) mit einer in Achsrichtung dieser zweiten Arbeitsspindel (14) liegenden Werkzeugausrichtung befindet und das andere Greifende (32') eine einer senkrecht zur Spindelebene liegenden Werkzeugausrichtung entsprechende Lage einnimmt.

3. Werkzeugmaschine nach Anspruch 1 oder 2, dadurch gekennzeichnet, daß der Wechselarm (28) als Ganzes senkrecht zur Spindelebene verschiebbar gelagert ist und daß er mit einem am Ende des Verschiebeweges angeordneten Werkzeugmagazin (22) zusammenwirkt.

4. Werkzeugmaschine nach Anspruch 3, dadurch gekennzeichnet, daß die Werkzeuge (24) im Magazin (22) senkrecht zur Spindelebene angeordnet sind.

5. Werkzeugmaschine nach einem der Ansprüche 1 bis 4, dadurch gekennzeichnet, daß die Schwenkachse (48) mit der senkrecht zur Spindelebene stehenden Werkzeugachse (58) zusammenwirkt.

6. Werkzeugmaschine nach einem der Ansprüche 3 bis 5, gekennzeichnet durch einen senkrecht zur Spindelebene sich erstreckenden Träger (62), einen daran in Trägerrichtung verschiebbar und um eine senkrecht zur Spindelebene liegende Schwenkachse (48) schwenkbar angeordneten Tragebock (68) sowie ein am Tragebock (68) parallel zur Spindelebene verschiebbar angeordnetes Lagergehäuse (72) in welchem die Drehachse (30) des Wechselarmes (28) drehbar gelagert ist und in welchem ein mit der Drehachse (30) verbundener Antriebsmotor (74) angeordnet ist.

7. Werkzeugmaschine nach einem der Ansprüche 3 bis 6, dadurch gekennzeichnet, daß das Werkzeugmagazin (22) zusammen mit dem Wechselarm (28) um die Schwenkachse (48) verschwenkbar ist.

## Claims

1. Machine tool with two work spindle axes positioned at an angle to one another in a spindle plane, characterised in that there is provided a changing arm (28), comprising two arms aligned essentially radially with respect to an axis of rotation (30), wherein the gripping ends (32, 34) of the arms, which are provided with gripping devices, are each inclined at an angle of 45° to the axis of rotation (30) and are laterally offset with respect to one another in relation to a plane of reference extending through the axis of rotation (30), so that the axes (56, 58) of the tools (40, 42) to be inserted do not intersect, and wherein, moreover, the tools (40, 42) are each received in the changing arm (28) in such a way that the ends (52, 54) that are to be inserted into the two work spindles (14, 16) point away from the axis of rotation (30), that the changing arm (28) is supported on the machine tool in such a way that it can rotate about the axis of rotation (30) and can move in the respective directions (44, 46) of the axes (56, 58), and that the changing arm (28) as a whole, i.e. with its rotatable and movable supporting arrangement, can in addition pivot about a swivel axis (48) positioned at right angles to the spindle plane defined by the two spindle axes between two different change positions within an angle corresponding to the angle provided between the spindle axes, the axis of rotation (30) being aligned at an angle of 45° with respect to a first work spindle axis (16) in the first position, and at an angle of 45° with respect to a second work spindle axis (14) in the second position.

2. Machine tool according to claim 1, characterised in that in the first change position, one gripping end (32) is disposed in front of the first spindle (16), the tool being aligned with respect to the axial direction of the first work spindle (16), and the other gripping end (34) assumes a position according to which the tool is aligned so that it lies at right angles to the spindle plane, and that in the second change position, one gripping end (34') is disposed in front of the second spindle (14), the tool being aligned with respect to the axial direction of this second work spindle (14), and the other gripping end (32') assumes a position according to which the tool is aligned so that it lies at right angles to the spindle plane.

3. Machine tool according to claim 1 or 2, characterised in that the changing arm (28) as a whole is supported in such a way that it can move at right angles to the spindle plane and that it cooperates with a tool magazin (22) disposed at the end of path of traverse.

4. Machine tool according to claim 3, characterised in that the tools (24) are arranged in the tool magazin (22) at right angles to the spindle plane.

5. Machine tool according to one of claims 1 to 4, characterised in that the swivel axis (48) coincides with the tool axis (58) positioned at right angles to the spindle plane.

6. Machine tool according to one of claims 3 to 5, characterised by a beam (62) extending at right angles to the spindle plane, a support (68) mounted thereon in such a way that it can move in the direction of the beam and can pivot about a swivel axis (48) lying at right angles to the spindle plane, and a bearing housing (72) mounted on the support (68) in such a way that it can move parallel to the spindle plane, in which bearing housing (72) the axis of rotation (30) of the changing arm (28) is rotatably supported and in which is disposed a drive motor (74) associated with the axis of rotation (30).

7. Machine tool according to one of claim 3 to 6, characterised in that the tool magazin (22) car pivot about the swivel axis (48) together with the changing arm (28).

## Revendications

1. Machine-outil comportant deux axes de broche de travail formant un angle entre eux dans un plan de broche, caractérisée

- en ce qu'il est prévu un bras d'échange (28) comportant deux bras dirigés en général radialement par rapport à un axe de rotation (30), les extrémités de préhension (32, 34) des bras, pourvues de dispositifs de préhension, étant coudées chacune de 45° par rapport à l'axe de rotation (30), et décalées latéralement par rapport à un plan de référence passant par l'axe de rotation (30), de sorte que les axes (56, 58) des outils (40, 42) à mettre en place ne se coupent pas, et en outre les outils (40, 42) étant logés dans le bras d'échange (28), orientés de manière que leurs extrémités (52, 54) à introduire dans les broches de travail (14, 16), s'éloignent de l'axe de rotation (30),

- en ce que le bras d'échange (28) est monté tournant autour de l'axe de rotation (30) et coulissant sur la machine-outil dans la direction (44, 46) des axes (56, 58),

- et en ce que le bras d'échange (28) peut pivoter en outre, dans son ensemble, avec sa suspension en rotation et en translation, autour d'un axe de pivotement (48) perpendiculaire au plan de broche défini par les deux axes de broche, dans une zone correspondant à l'angle compris entre les axes de broche, entre deux positions d'échange, dans la première desquelles l'axe de rotation (30) forme un angle de 45° par rapport à un premier axe de broche de travail (16), et dans la deuxième, l'axe de rotation (30) forme un angle de 45° par rapport à un deuxième axe de broche de travail (14).

2. Machine-outil selon la revendication 1, caractérisée en ce que dans la première position d'échange, une première extrémité de préhension (32) se trouve devant la première broche de travail (16) avec un outil dirigé dans l'axe de la première broche de travail (16), et la deuxième extrémité de préhension (34) occupe une position correspondant à un outil orienté perpendiculairement sur le plan de la broche, et en ce que dans la deuxième position d'échange, une extrémité de préhension (34') se trouve devant la deuxième broche de travail (14), avec un outil orienté dans l'axe de cette deuxième broche de travail (14), et l'autre extrémité de préhension (32') occupe une position correspondant à un outil dirigé perpendiculairement au plan de la broche.

3. Machine-outil selon la revendication 1 ou 2, caractérisée en ce que le bras d'échange (28) dans son ensemble est monté de manière à coulisser perpendiculairement au plan de la broche, et en ce qu'il coopère avec un magasin d'outils (22) placé à l'extrémité du parcours de coulissement.

4. Machine-outil selon la revendication 3, caractérisée en ce que les outils (24) sont placés dans le magasin (22) perpendiculairement au plan de la broche.

5. Machine-outil selon l'une des revendications 1 à 4, caractérisée en ce que l'axe de pivotement (48) coopère avec l'axe d'outil (58) perpendiculaire au plan de la broche.

6. Machine-outil selon l'une des revendications 3 à 5, caractérisée par un support (62) perpendiculaire au plan de la broche, par un chevalet (68) coulissant dans la direction du support et placé pivotant autour d'un axe de pivotement (48) perpendiculaire au plan de la broche, ainsi que par une boîte de palier (72) placée coulissante sur le chevalet (68), parallèlement au plan de la broche, boîte dans laquelle l'axe de rotation (30) du bras d'échange (28) est monté tournant, et dans laquelle est placé un moteur d'entraînement (74) relié à l'axe de rotation (30).

7. Machine-outil selon l'une des revendications 3 à 6, caractérisée en ce que le magasin d'outils (22) peut pivoter en même temps que le bras d'échange (28) autour de l'axe de pivotement (48).

FIG. 1

EP 0 154 349 B1

# FIG. 2

FIG. 3

EP 0 154 349 B1

# FIG. 4

EP 0 154 349 B1